Europäisches Patentamt

European Patent Office

Office européen des brevets

(11) Veröffentlichungsnummer: **0 484 653 A1**

# EUROPÄISCHE PATENTANMELDUNG

(21) Anmeldenummer: **91115148.8**

(22) Anmeldetag: **07.09.91**

(51) Int. Cl.5: **B65H 29/68**, F16H 35/02

(30) Priorität: **05.11.90 US 609200**

(43) Veröffentlichungstag der Anmeldung:
**13.05.92 Patentblatt 92/20**

(84) Benannte Vertragsstaaten:
**CH DE FR GB LI SE**

(71) Anmelder: **Heidelberger Druckmaschinen Aktiengesellschaft**
**Kurfürsten-Anlage 52-60 Postfach 10 29 40**
**W-6900 Heidelberg 1(DE)**

(72) Erfinder: **Mack, Richard Burkhard**
**Plöck 9**
**W-6900 Heielberg(DE)**
Erfinder: **Belanger, Roger Robert**
**336 Back Road**
**Dover, New Hampshire 03820(US)**

(74) Vertreter: **Stoltenberg, Baldo Heinz-Herbert et al**
**c/o Heidelberger Druckmaschinen AG**
**Kurfürsten-Anlage 52-60**
**W-6900 Heidelberg 1(DE)**

(54) **Verlangsamungssystem im Falzapparat einer Rotationsdruckmaschine.**

(57) Bei der Erfindung handelt es sich um eine Einrichtung zum Verlangsamen von Falzprodukten, bei der die aufeinanderfolgenden Falzprodukte von verzögerbaren Transporteinrichtungen erfaßt und weitertransportiert werden. Einander gegenüberliegend angeordnete Transportvorrichtungen (6, 7), die eine Bewegungsbahn (15) durchlaufen, werden von einem Planetengetriebe (16) angetrieben. Bei der Umdrehung von Planetenrädern (21, 22) um ein Sonnenrad (23) beschreibt ein Momentanzentrum P1 eine kardioidenförmig verlaufende Kurve, welche über Mitnehmer (17, 18) bzw. einen Antriebsarm (55) während der Umdrehung der Planetenräder (21, 22) unterschiedliche Umlaufgeschwindigkeiten der Transportvorrichtungen (6, 7) bestimmt.

Fig. 1

Die Erfindung bezieht sich auf ein Verlangsamungssystem im Falzapparat einer Rotationsdruckmaschine.

Aus der DE-PS 34 04 459 sind ein Verfahren und eine Vorrichtung zur Auslage bogenförmiger Produkte in Form eines Schuppenstroms bekannt.

Überlappungsfrei transportierte Produkte werden in einem Schuppenaggregat verzögert, schuppenförmig übereinander angeordnet weitertransportiert und in Form eines Schuppenstroms auf ein Transportband ausgelegt. Greifer werden in Bezug auf eine mit diesen rotierende Trommel verzögert bzw. beschleunigt. Die Greifer bewegen sich in Schlitzen auf dem Mantel der Trommel. Neun sternförmig angeordnete, in je zwei Schwingen gelagerte Greiferleisten nehmen die bogenförmigen Produkte an deren Vorderkanten auf. Bei der Verzögerung der Greiferleisten kommt es durch den Kontakt zwischen der gesamten, auf der Trommel aufliegenden Unterseite des Falzproduktes und dem mit konstanter Geschwindigkeit rotierenden Trommelmantel ungünstigerweise zu einer großflächigen Relativbewegung zwischen der Unterseite des Falzproduktes und dem Trommelmantel. Dadurch entstehen auf dem Falzprodukt unerwünschte Schleifspuren und Kratzer.

Ein weiterer Nachteil dieser Vorrichtung besteht darin, daß jedes der neun sternförmig angeordneten Schwingenpaare separat angetrieben wird. Dadurch stellt sich eine Geschwindigkeitsbegrenzung nach oben ein. Zudem benötigt diese Vorrichtung viel Platz im Falzapparat.

Die genannte Vorrichtung der DE-PS 34 04 459 ist ferner nur bei großen Zylindern einsetzbar. Um eine ausreichende Anzahl von Greifersystemen zu haben, wird viel Bauraum beansprucht. Ein zusätzlicher gravierender Nachteil der erwähnten Einrichtung ist die mangelhafte Eignung für hohe Frequenzen. Die Führungen, in denen sich die axialen Vorsprünge des Drehkranzes pro Umdrehung schnell auf und ab bewegen, sind hoher Beanspruchung und daher hohem Verschleiß ausgesetzt. Sich durch zunehmendes Spiel zwischen den axialen Vorsprüngen und den Begrenzungen der Führungen einstellende Ungenauigkeiten beeinträchtigen die Präzision der Auslage.

Die Nachteile des Standes der Technik werden durch die Erfindung beseitigt.

Der Erfindung liegt die Aufgabe zugrunde, ein Verlangsamungssystem für Falzprodukte im Falzapparat so zu optimieren, daß eine kontinuierliche Verlangsamung der Falzprodukte bei hoher Betriebssicherheit in kompakter Bauweise realisiert werden kann.

Erfindungsgemäß wird die Aufgabe dadurch gelöst, daß einander gegenüberliegend angeordnete Transportvorrichtungen eine Bewegungsbahn durchlaufen und dabei von einem Planetengetriebe angetrieben werden, und daß bei der Umdrehung der Planetenräder um ein Sonnenrad ein Momentanzentrum P1 eine kardioidenförmig verlaufende Kurve beschreibt, welche über Mitnehmer bzw. einen Antriebsarm während der Umdrehung der Planetenräder unterschiedliche Umlaufgeschwindigkeiten der Transportvorrichtungen bestimmt.

Die Vorteile liegen in einer sicheren Beförderung der Falsprodukte in die Produktauslage. Die verwendeten Transportvorrichtungen ermöglichen einen störungsfreien Transport von mehrseitigen Falzprodukten bei hohen Geschwindigkeiten, da es sich um ein rotatives Bewegungssystem ohne Linearbewegung handelt. Durch kontinuierliche Verlangsamung der Falzprodukte auf einer Verzögerungsbahn wird eine aufstauchfreie und schonende Produktauslage erreicht. Dabei ist die Einrichtung zum Verlangsamen von Falzprodukten vielseitig verwendbar. Sie kann aufgrund ihrer kompakten Bauweise einer Schaufelradauslage vorgeschaltet oder einem Auslegeband vorgelagert sein, welches mit einer langsameren Geschwindigkeit umläuft, was einen geschuppten Falzproduktstrom zur Folge hat. Eine weitere Einsatzmöglichkeit der Einrichtung zum Verlangsamen von Falzprodukten eröffnet sich bei Stapelauslage der Falzprodukte. Die Verwendung des Planetengetriebes ist beim Betrieb mit hohen Geschwindigkeiten ideal, die Massenkräfte bei hohen und höchsten Drehzahlen können gering gehalten werden.

In einer günstigen Ausführung der Erfindung sind in einem Antriebszahnrad, welches von einem Antriebsritzel angetrieben wird, Planetenräder auf Stummelwellen gelagert. Die Planetenräder kreisen um ein Sonnenrad, das auf einer in einer Seitenwand fest gelagerten Achse angeordnet ist. Ein Paar Greiferbrücken zum Ergreifen und Transportieren der Falzprodukte werden von den gegenüberliegenden Enden eines Mitnehmers getragen. Der Mitnehmer ist mit den Planetenrädern durch Zapfen verbunden, welche sich drehen, wenn die Planetenräder um das Sonnenrad kreisen. Ein Punkt auf dem Mitnehmer folgt einer Herzkurve, während der Mitnehmer sich dreht. Somit erfahren die Enden des Mitnehmers translatorische und rotative Bewegungen, und die Greiferbrücken an den Enden des Mitnehmers drehen sich deshalb mit unterschiedlichen Drehgeschwindigkeiten.

Vorteilhaft bei dieser Ausführung ist der sichere Falzprodukttransport durch die Greiferbrücken und die bei hohen Drehzahlen auftretenden geringen Massenkräfte im Vergleich zum Stand der Technik. Außerdem liegt nur eine Rotationsbewegung vor, die nicht durch eine andere Bewegungsart überlagert wird.

In einer weiteren vorteilhaften Ausgestaltung der Erfindung sind in einem exzentrisch zu einer Symmetrielinie einer freitragenden Welle angeordneten Antriebszahnrad, welches von einem Antriebsritzel angetrieben wird, auf Stummelwellen Planetenräder gelagert, die um ein auf einer gehäusefest gelagerten Achse sitzendes Sonnenrad kreisen und über Anlenkhebel und Zapfen einen Antriebsarm bewegen, der seinerseits über Zapfen mit Führungen Arme antreibt, welche in Hülsen bewegbar und mit Trägersegmenten verbunden sind, die auf einer freitragenden Welle drehbar angeordnet sind und Greiferarme aufweisen, deren Greiferfinger durch Steuerkurven betätigt werden, um die transportierten Falzprodukte zu ergreifen.

Die Vorteile dieser Ausführungsform liegen darin, daß aufgrund des leichten Greifersystems geringe Massenkräfte auftreten und eine kreisförmige Bewegung der Greifer bewirkt wird. Die bei dieser Ausführungsform auftretende Linearbewegung ist minimal, da es sich lediglich um eine Ausgleichsbewegung handelt. Der Greiferwinkel bleibt während eines Umlaufs konstant, die Falzprodukte werden somit nicht geknickt oder anderweitig mechanisch beansprucht.

Nach bei einer günstigen Ausführung der Erfindung öffnen sich die Transportvorrichtungen mittels Steuerkurven so rechtzeitig, daß der Luftwiderstand die Falzprodukte bei der Auslage auf einen Stapel zusätzlich abbremst und eine schonende, aufstauchfreie Produktauslage erreicht wird. Der Vorteil liegt darin, daß die Aufspreizung mehrseitiger Falzprodukte bei der Stapelauslage durch den Luftwiderstand zur weiteren Verzögerung der Falzprodukte ausgenutzt wird.

Weiterhin kann die Verlangsamungseinrichtung eingesetzt werden, indem diese einer Schaufelradauslage vorgeschaltet wird oder so, daß die Falzprodukte in einem geschuppten Strom auf ein Auslegeband ausgelegt werden.

Der Vorteil liegt in den vielfältigen Einsatzmöglichkeiten der Einrichtung zum Verlangsamen von Falzprodukten, die nicht zuletzt durch ihren geringen Platzbedarf bedingt sind.

Schließlich kann die Verlangsamungseinrichtung so eingesetzt werden, daß die Übernahme der Falzprodukte von einem Band oder einem anderen Greiferzylinder erfolgen kann und dabei eine erste, maximal 30%-ige Verlangsamung erreicht wird.

Die Merkmale der Erfindung werden nachstehend im Zusammenhang mit den beigefügten erläuterten Zeichnungen weiter verdeutlicht.

Fig. 1    ist eine Seitenansicht eines Verlangsamungssystems mit rollengesteuerten Greiferbrücken;

Fig. 1a    ist eine Darstellung des Bewegungsablauf eines Punktes auf einer Kardioiden;

Fig. 2    ist ein Längsschnitt durch ein Verlangsamungssystem;

Fig. 3    ist ein Querschnitt durch ein Verlangsamungssystem, angetrieben von einer Zahnradgetriebe/Kurbeltriebkombination mit Greiferarmen; und

Fig. 4    ist eine Darstellung über den Geschwindigkeitsverlauf von Falzprodukten, aufgetragen über den Rotationswinkel des Verlangsamungssystems.

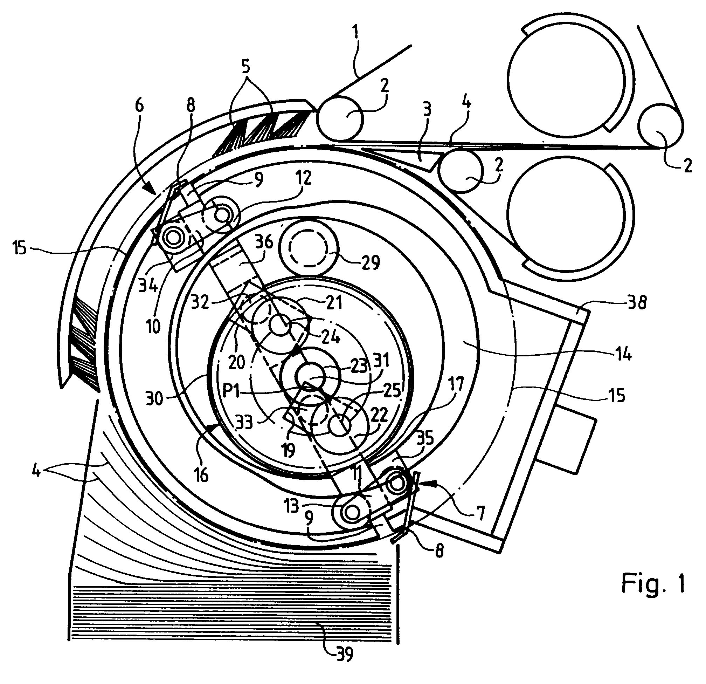

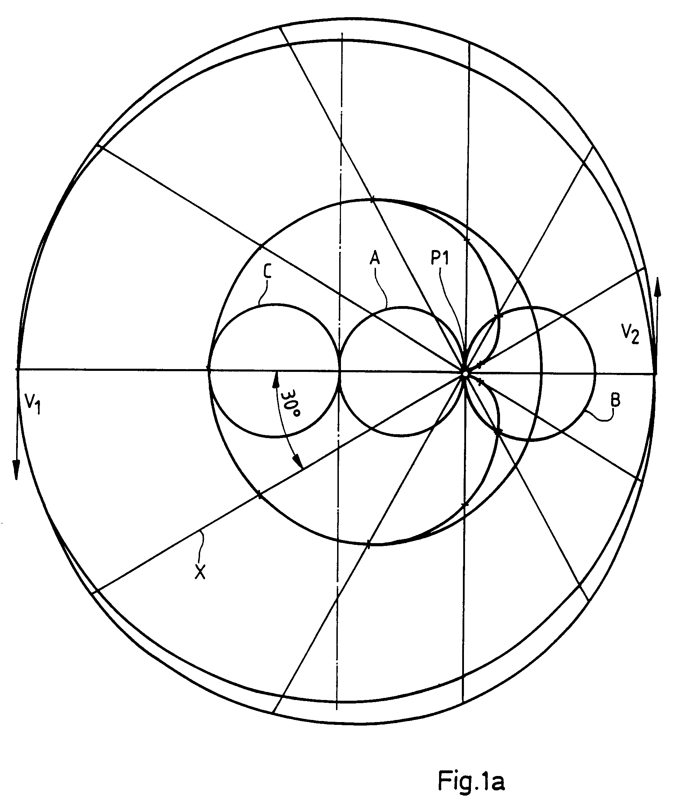

Wie in Fig. 1 dargestellt, fördert ein Transportband 1, welches von Transportbandwalzen 2 angetrieben wird, über einen Zwickel 3 Falzprodukte 4 in ein Verlangsamungssystem im Falzapparat. Der Zwickel 3 unterstützt die präzise Führung der Falzprodukte 4 vor Eintritt in das Verlangsamungssystem. Danach werden die Falsprodukte 4 von Transportvorrichtungen 6, 7 erfaßt und mit Hilfe von Bürsten 5 zusätzlich geführt.

Die Transportvorrichtungen 6, 7 können, wie in Fig. 1 dargestellt, als Greifer ausgeführt sein. Dies stellt ein zuverlässiges Erfassen der Falzprodukte 4 bei hohen Geschwindigkeiten sicher. Mehrere auf Greiferbrücken 34, 35 angeordnete Greifer wirken einer Aufspreizung von mehrseitigen Falzprodukten 4 entgegen, die mit ihrer offenen Seite in Bewegungsrichtung transportiert werden. Die Greifer bestehen aus Greiferfingern 8 und Greiferamboß 9. Die Steuerhebel 10, 11 weisen Steuerrollen 12, 13 auf und sind mit Greiferbrücken 34 bzw. 35 verbunden, auf welchen nebeneinander Greiferfinger 8 befestigt sind. Die Steuerrollen 12, 13 rollen ihrerseits auf einer Steuerkurve 14 ab, die an einer Seitenwand 28 befestigt ist. Über die Steuerkurve 14 wird das Öffnen und Schließen der Transportvorrichtungen 6, 7 bewirkt.

Das Planetengetriebe (16) treibt einen Mitnehmer 17 an. Gegenüberliegend ist ein Mitnehmer 18 vorgesehen, der nicht angetrieben ist. Die Mitnehmer 17, 18 sind über Querträger 36, 37 miteinander verbunden. Die Zahnräder, welche an der Seitenwand 28 vorgesehen sind, haben lediglich Trägerfunktion. Zwei Anlenkhebel 19, 20 treiben den Mitnehmer 17 an. Über zwei Zapfen 32, 33 sind die Anlenkhebel 19, 20 beweglich mit dem Mitnehmer 17 verbunden. Beide Anlenkhebel 19, 20 sind starr mit zwei Plantenrädern 21 und 22 verbunden. Die Planetenräder 21 und 22 kreisen um ein ortsfestes Sonnenrad 23. Über kurze, drehbar gelagerte Stummelwellen 24, 25 sind die Planetenräder 21, 22 in einem Antriebszahnrad 30 gelagert, welches mit einem Antriebsritzel 29 kämmt.

In Fig. 1a ist der Bewegungsablauf eines Punktes auf einer Kardioiden dargestellt. Anhand dieser Figur sei das der Verlangsamung zugrundeliegende Prinzip erläutert. Das Rad A entspricht dem feststehenden Sonnenrad 23, die Räder B und C entsprechen den umlaufenden Planetenrädern 21 und 22. Der in Fig. 1a mit P1 bezeichnete Punkt beschreibt bei Drehung des Rades B um das feststehende Rad A eine Kardioide. Bei Verbindung der Punkte P1 auf Rad B und P2 auf Rad C durch eine idealisierte Stange "X" entsteht ein geeignetes Instrument zur Verlangsamung umlaufender Transportvorrichtungen. In den Ausführungsformen entspricht die idealisierte Stange X den Mitnehmern 17 und 18 bzw. dem Antriebsarm 55.

Betrachtet man den Umlauf des Momentanzentrums P1 auf der Kardioiden, was hier in Winkelschritten von 30° angedeutet ist, so wird deutlich, daß, bezogen auf den Punkt P1, ein großer Abstand zur Bewegungsbahn nach Übernahme des Falzproduktes während dessen Verlangsamung besteht. Zum selben Zeitpunkt wird die gegenüberliegende Transportvorrichtung wieder auf die Übernahmegeschwindigkeit beschleunigt und der Abstand zur Bewegungssbahn verringert, bis die Übernahme des nächsten Falzproduktes erfolgen kann.

Die Verlangsamung wird demnach durch Ausnutzung des Geschwindigkeitsverhaltens eine Punktes erreicht, der eine Kardioide beschreibt.

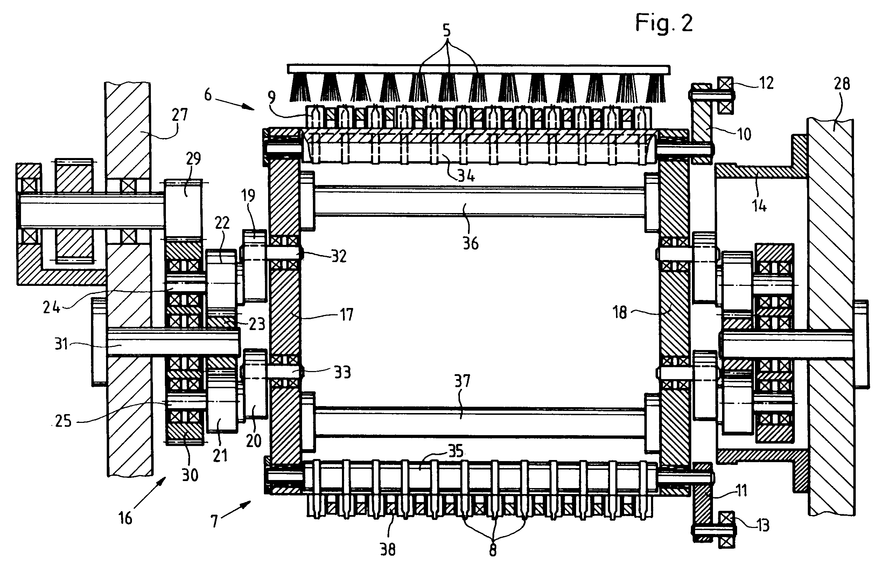

Wie in Fig. 2 gut zu erkennen ist, wird der Mitnehmer 17 über Zapfen 32, 33 und Anlenkhebel 19, 20 zweifach gelagert. Die durch die Umdrehung des Antriebszahnrodes 30 bewirkte Umdrehung der Planetenräder 21, 22 um das ortsfeste Sonnenrad 23 führt zur Umdrehung der Anlenkhebel 19, 20. Diese rotieren, wie in Fig. 1 erkennbar ist, um die Zentren der Stummelwellen 24, 25. Die Anlenkhebel 19, 20 führen somit eine Drehbewegung relativ zur Umdrehung des Antriebszahnrades 30 aus.

In Fig. 1 ist erkennbar, daß die Transportvorrichtung 6 nach Aufnahme eines Falzproduktes 4 einen großen Abstand zu Punkt P1 aufweist. Demgegenüber hat die Transportvorrichtung 7 gerade ein Falzprodukt 4 zur Ablage auf den Stapel 39 freigegeben. Wie zu erkennen ist, ist der Abstand zwischen Punkt P1 und der Bewegungsbahn 15 zum Zeitpunkt der Freigabe der Falzprodukte 4 minimal, so daß die Geschwindigkeit der Falzprodukte 4 ebenfalls ein Minimum erreicht. Nach der Freigabe der Falzprodukte 4 nimmt die Geschwindigkeit der Transportvorrichtungen 6 bzw. 7 wieder zu.

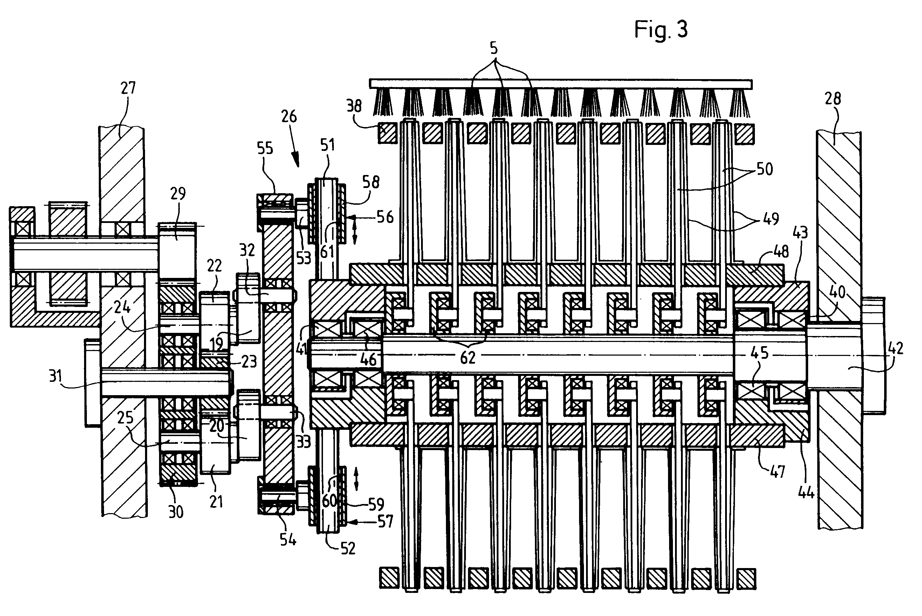

In Fig. 3 ist ein Schnitt durch ein Verlangsamungssystem, angetrieben von einer Zahnradgetriebe/Kurbeltriebkombination mit Greiferarmen, dargestellt. Hier handelt es sich um eine modifizierte Variante eines Verlangsamungssystems für Falzapparate.

Im linken Teil der Fig. 3 ist wiederum ein Planetengetriebe 16 zu erkennen, das über eine Achse 31 in einer Seitenwand 27 fixiert ist. In der rechten Seitenwand 28 ist eine freitragende Welle 42 gelagert. Diese weist ein Trägersegment 43 auf, welches über Wälzlager 40, 41 mit der freitragenden Welle 42 drehbar verbunden ist. Gegenüberliegend ist ebenfalls ein Trägersegment 44 angeordnet, welches über Wälzlager 45, 46 auf der freitragenden Welle 42 drehbar angeordnet ist. Die Trägersegmente 43, 44 sind somit unabhängig voneinander auf der freitragenden Welle 42 zu bewegen.

Auf den Trägersegmenten 43, 44 sind Greiferstützen 47, 48 befestigt, welche in schlanken Buchsen 49 Greiferarme 50 aufnehmen. Die schlanken Buchsen 49 sind auf dem äußeren Umfang der Trägersegmente 43, 44 befestigt. Über Arme 51, 52, welche an den Trägersegmenten 43, 44 einander gegenüberliegend angebracht sein können, werden die Trägersegmente 43, 44 bewegt. Dies geschieht über Zapfen mit Führungen 53, 54, welche im Antriebsarm 55 drehbar gelagert sind. Der Antriebsarm 55 wird, wie bereits vorstehend beschrieben, über die Zapfen 32, 33 sowie über die Anlenkhebel 19, 20 so bewegt, daß der Abstand zwischen der Symmetrielinie der freitragenden Welle 42 und der Symmetrielinien der Zapfen mit Führung 53, 54 sich je nach Rotationswinkel ändert. Die Gleitführungen 56, 57 ermöglichen eine translatorische Bewegung der Arme 51, 52. Die dabei auftretenden unterschiedlichen Abstände durch die Rotation der Anlenkhebel 19, 20 um die Zentren der Stummelwellen 24, 25, bewirken bei konstanter Winkelgeschwindigkeit eine Änderung der Geschwindigkeit in Umfangsrichtung entlang der Verlangsamungsbahn 15a und der Beschleunigungsbahn 15b.

Zur Ermöglichung der translatorischen Bewegung der Zapfen mit Führungen 53, 54 an den Armen 51, 52, umfassen Buchsen 58, 59 innenliegende Hülsen 60, 61. Dadurch wird eine Relativbewegung der Zapfen mit Führungen 53, 54 und der Arme 51, 52 zueinander möglich. Die translatorische Bewegung ist nicht kritisch, da keine hohen Geschwindigkeiten auftreten, selbst bei hohen Frequenzen, da die Zapfen 53, 54 nur eine Ausgleichsbewegung durchlaufen. Die Bewegung der Greiferarme 50 in dieser Ausführungsvariante erfolgt über innenliegende Steuerkurven 62, welche die Greiferfinger 7 rechtzeitig öffnen und schließen.

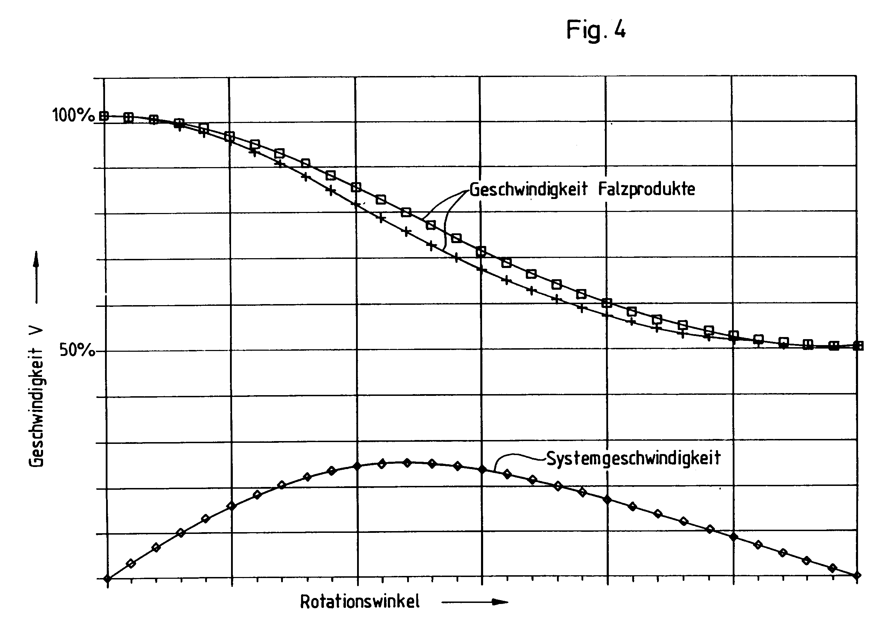

In Fig. 4 ist der Geschwindigkeitsverlauf von Falzprodukten, aufgetragen über den Rotationswinkel des Verlangsamungssystems, wiedergegeben. Im unteren Abschnitt des Diagramms ist die Geschwindigkeit des Verlangsamungssystems über dem Rotationswinkel dargestellt. Aus den beiden im oberen Abschnitt von Fig. 4 gezeichneten Kurven geht hervor, daß die Geschwindigkeit von Falzprodukten mit dem hier vorgestellten Verlangsamungssystem um mehr als 50% abgesenkt werden kann. Dabei beziehen sich die beiden Kurven auf die beiden ausgeführten Varianten des Verlangsamungssystems. Es ist zu erkennen, daß die erreichbare Verlangsamung der Falzprodukte bei beiden Ausführungen im wesentlichen gleich verläuft.

Bei dem in Fig. 1 und 2 gezeigten Verlangsamungssystem handelt es sich um eine Variante, die mit Hilfe eines Planetengetriebes angetrieben wird. Die Vorteile liegen im sicheren Falzprodukttransport durch die Greiferbrücken 34, 35 und in der kontinuierlichen Verlangsamung der Falzprodukte 4. Bei dieser Variante des Erfindungsgegenstandes liegt nur eine Rotationsbewegung vor.

In Fig. 3 ist ein Verlangsamungssystem gezeigt, welches über eine Planetengetriebe/Kurbeltriebkombination angetrieben wird. Auch hier liegt ein Vorteil darin, daß ein sicherer Papiertransport durch Greifer gewährleistet ist und die Falzprodukte kontinuierlich verlangsamt werden. Weiterhin treten bei hohen Drehzahlen nur geringe Massenkräfte aufgrund des leichten Greifersystems auf. Außerdem beschreiben die Transportvorrichtungen eine kreisförmige Bahn, auf der der Greiferwinkel unverändert bleibt.

Die Erfindung kann in punkturlosen Trichterfalzapparaten, bei Hochgeschwindigkeitsfalzapparaten sowie bei Kombinationsfalzapparaten benutzt werden.

Die vorangehend beschriebenen Ausführungsbeispiele gelten als bevorzugte Ausführungen der Erfindung, welche jedoch keine Einschränkung des Rahmens der Erfindung darstellen.

BEZUGSZEICHENLISTE

| | |
|---|---|
| 1 | Transportband |
| 2 | Transportbandwalzen |
| 3 | Zwickel |
| 4 | Falzprodukt |
| 5 | Bürsten |
| 6 | Transportvorrichtung |
| 7 | Transportvorrichtung |
| 8 | Greiferfinger |
| 9 | Greiferamboß |
| 10 | Steuerhebel |
| 11 | Steuerhebel |
| 12 | Steuerrolle |
| 13 | Steuerrolle |
| 14 | Steuerkurve |
| 15 | Bewegungsbahn |
| 16 | Planetengetriebe |
| 17 | Mitnehmer, links |
| 18 | Mitnehmer, rechts |
| 19 | Anlenkhebel |
| 20 | Anlenkhebel |
| 21 | Planetenrad |
| 22 | Planetenrad |
| 23 | Sonnenrad |
| 24 | Stummelwelle |
| 25 | Stummelwelle |

| | |
|---|---|
| 26 | Kurbeltrieb |
| 27 | Seitenwand |
| 28 | Seitenwand |
| 29 | Antriebsritzel |
| 30 | Antriebszahnrad |
| 31 | Achse |
| 32 | Zapfen |
| 33 | Zapfen |
| 34 | Greiferbrücke |
| 35 | Greiferbrücke |
| 36 | Querträger |
| 37 | Querträger |
| 38 | Falzproduktführung |
| 39 | Stapel |
| 40 | Wälzlager |
| 41 | Wälzlager |
| 42 | freitragende Welle |
| 43 | Trägersegment |
| 44 | Trägersegment |
| 45 | Wälzlager |
| 46 | Wälzlager |
| 47 | Greiferstütze |
| 48 | Greiferstütze |
| 49 | Buchse |
| 50 | Greiferarm |
| 51 | Arm |
| 52 | Arm |
| 53 | Zapfen mit Führung |
| 54 | Zapfen mit Führung |
| 55 | Antriebsarm |
| 56 | Gleitführung |
| 57 | Gleitführung |
| 58 | Buchse |
| 59 | Buchse |
| 60 | Hülse |
| 61 | Hülse |
| 62 | Steuerkurve |

**Patentansprüche**

1. Einrichtung zum Verlangsamen von Falzprodukten, bei der die aufeinanderfolgenden Falzprodukte von verzögerbaren Transporteinrichtungen erfaßt und weitertransportiert werden, **dadurch gekennzeichnet,**
daß bei einander gegenüberliegend angeordneten Transportvorrichtungen (6, 7), die eine Bewegungsbahn (15) durchlaufen und von einem Planetengetriebe (16) angetrieben werden, bei der Umdrehung der Planetenräder (21, 22) um ein Sonnenrad (23) ein Momentanzentrum P1 eine kardioidenförmig verlaufende Kurve beschreibt, welche über Mitnehmer (17, 18) bzw. einen Antriebsarm (55) während der Umdrehung der Planetenräder (21, 22) unterschiedliche Umlaufgeschwindigkeiten der Transportvorrichtungen (6, 7) bestimmt.

**2.** Einrichtung zum Verlangsamen nach Anspruch 1,
**dadurch gekennzeichnet**,
daß in einem Antriebszahnrad (30), welches von einem Antriebsritzel (29) angetrieben wird, auf Stummelwellen (24, 25) Planetenräder (21, 22) gelagert sind, die um ein Sonnenrad (23) kreisen, das auf einer in einer Seitenwand (27) fest gelagerten Achse (31) angeordnet ist, und Zapfen (32, 33) einen Mitnehmer (17) antreiben, welcher Greiferbrücken (34, 35) aufnimmt, die die Falzprodukte (4) hintereinander transportieren und unterschiedliche Geschwindigkeiten annehmen.

**3.** Einrichtung zum Verlangsamen nach Anspruch 1,
**dadurch gekennzeichnet**,
daß in einem exzentrisch zu einer Symmetrielinie einer freitragenden Welle (42) angeordneten Antriebszahnrad (30) auf Stummelwellen (24, 25) Planetenräder (21, 22) gelagert sind, die um ein auf einer gehäusefest gelagerten Achse (31) sitzendes Sonnenrad (23) kreisen und über Anlenkhebel (19, 20) und Zapfen (32, 33) einen Antriebsarm (55) bewegen, der seinerseits über Zapfen mit Führungen (53, 54) Arme (51, 52) antreibt, welche in Hülsen (60, 61) bewegbar und mit Trägersegmenten (43, 44) verbunden sind, die auf einer freitragenden Welle (42) drehbar angeordnet sind und Greiferarme (50) aufweisen, deren Greiferfinger 8 durch Steuerkurven (62) betätigt werden.

**4.** Einrichtung zum Verlangsamen nach Anspruch 1,
**dadurch gekennzeichnet**,
daß die Transportvorrichtungen (6, 7)mittels Steuerkurven (14, 62) Falzprodukte (4) so rechtzeitig freigeben, daß der Luftwiderstand die Abbremsung der Falzprodukte (4) zusätzlich unterstützt und eine schonende, aufstauchfreie Produktauslage erreicht wird.

**5.** Einrichtung zum Verlangsamen nach Anspruch 1,
**dadurch gekennzeichnet**,
daß diese einer Schaufelradauslage vorgeschaltet ist, oder daß Falzprodukte (4) auf einem Auslegeband in geschupptem Strom ausgelegt werden.

**6.** Einrichtung zum Verlangsamen nach Anspruch 1,
**dadurch gekennzeichnet**,
daß die Übernahme der Falzprodukte (4) von einem Band oder von einem anderen Greiferzylinder erfolgen kann, und eine erste, maximal 30%-ige Verlangsamung erreicht wird.

**7.** Einrichtung zum Verlangsamen von aufeinanderfolgend beförderten Falzprodukten, welche die folgenden Merkmale umfaßt:
eine erste Transportvorrichtung (6) zum Ergreifen und Freigeben von Falzprodukten;
eine zweite Transportvorrichtung (7) zum Ergreifen und Freigeben von Falzprodukten;
einen Mitnehmer (17, 18 oder 55) mit einem ersten und einem zweiten Endteil;
ein Planetengetriebe (16) zum Bewegen des genannten Mitnehmers um eine Achse (31), so daß ein Punkt (P1) auf dem genannten Mitnehmer (17, 18 oder 55) einer Kardioide um die genannte Achse (31) folgt und sich die genannten Endteile des genannten Mitnehmers (17, 18 oder 55) in bezug auf die genannte Achse (31) translatorisch bewegen und sich in der einen Hälfte ihrer Bewegungsbahn um die genannte Achse (31) verlangsamen und sich in der anderen Hälfte ihrer Bewegungsbahn um die genannte Achse (31) beschleunigen;
und Zapfen (32, 33) zum Verbinden der genannten ersten Transportvorrichtung (6) mit dem ersten Endteil des genannten Mitnehmers (17, 18 oder 55) zur Umdrehung der genannten ersten Transportvorrichtung (6) um die genannte Achse (31) mit dem genannten ersten Endteil, und zum Verbinden der genannten zweiten Transportvorrichtung (7) mit dem genannten zweiten Endteil des genannten Mitnehmers (17), 18 oder 55) zur Umdrehung der genannten Transportvorrichtung (7) um die genannte Achse (31) mit dem genannten zweiten Endteil.

Fig. 1

Fig.1a

Fig. 2

Fig. 3

Fig. 4

**Europäisches Patentamt**

# EUROPÄISCHER RECHERCHENBERICHT

Nummer der Anmeldung

EP   91 11 5148

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | EP-A-0 256 795 (ROCKWELL GRAPHIC SYSTEMS LIMITED) <br> * das ganze Dokument * | 1,5,6 | B65H29/68 <br> F16H35/02 |
| Y | --- | 2-4,7 | |
| A | 'Das Bertelsmann Lexikon' <br> 1954 , C. BERTELSMANN , MüNCHEN <br> * Seite 845, linke Spalte, Zeile 62 - Seite 845, linke Spalte, Zeile 68; Abbildung * <br> --- | 1,7 | |
| Y | FR-A-2 558 556 (COMPAGNIE GENERALE DE MANUTANTION ET DE STOCKAGE CGMS) <br> * Seite 3, Zeile 1 - Seite 4, Zeile 32; Abbildungen 1-4 * <br> --- | 2,3,7 | |
| Y | DE-A-2 928 408 (MEULEN) <br> * Abbildung 1 * <br> --- | 4 | |
| A | DE-A-3 508 186 (EASOM ENGINEERING AND MANUFACTURING CORP.) <br> --- | | |
| A | EP-A-0 049 470 (WINDMÖLLER & HÖLSCHER) <br> --- | | **RECHERCHIERTE SACHGEBIETE (Int. Cl.5 )** |
| A | DE-A-1 129 029 (COMPAGNIE DE SAINT-GOBAIN) <br> ----- | | B65H <br> F16H |

Der vorliegende Recherchenbericht wurde für alle Patentansprüche erstellt

| Recherchenort | Abschlußdatum der Recherche | Prüfer |
|---|---|---|
| DEN HAAG | 03 MAERZ 1992 | |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
.............................................................
& : Mitglied der gleichen Patentfamilie, übereinstimmendes Dokument

EPO FORM 1503 03.82 (P0403)